# EUROPEAN PATENT APPLICATION

(11) **EP 3 825 258 A1**
(43) Date of publication of application: **26.05.2021**
(21) Application number: 20209198.9
(22) Date of filing: 23.11.2020
(51) Int. Cl.: B65G 1/02, E04C 3/40

(54) **AUTOMATED STORAGE AND RETRIEVAL SYSTEM**

(30) Priority: 21.11.2019 GB 201916951
(71) Applicant: Moffett Automated Storage Limited, Monaghan (IE)
(72) Inventor: MOFFET, Sam, County Monaghan (IE)
(74) Representative: Schütte, Gearoid

(57) **Abstract**

An automated storage and retrieval system (1) comprises a three-dimensional lattice framework (2) having a plurality of storage bays (3). The framework (2) is formed by bolting together a plurality of frame members to form vertical stanchions (5) interconnected by horizontal beams (6). A rail network (7) extends through the framework (2). A robotic load handler is movable through the rail network (7) to deliver a load pallet to each storage bay (3) and to retrieve the load pallet from the storage bay (3) as required. A pedestrian tunnel (10) extends through the lattice framework (2) at a base of the lattice framework (2) to define a pedestrian access walkway within the lattice framework (2) alongside a number of the storage bays (3). This greatly increases the number of storage bays (3) from which perimeter picking is available. At the same time, there is minimal loss in storage capacity, as the lattice framework (2) extends upwardly above the tunnel (10).

## Description

This invention relates to an automated storage and retrieval system for the storage and retrieval of goods in a warehouse or distribution centre.

### Background to the Invention

The invention particularly relates to an automated storage and retrieval system including a three-dimensional lattice framework having a plurality of storage bays, a rail network extending through the framework, a robotic load handler movable through the rail network to each storage bay for delivery of a load pallet to, or retrieval of a load pallet from, each storage bay. Essentially, the lattice framework forms racking within a warehouse for the storage of goods on pallets. The robotic load handler can be sent into the framework to retrieve a pallet when the particular goods thereon are required. However, it is not always desired to fully unload a pallet of goods. For example, it may be desired to retrieve one or two cases of soft drinks from a particular pallet which may contain 20 or 30 cases of soft drinks. Thus, the pallet has to be retrieved, one or two cases removed, and then the pallet returned into the storage racking. To avoid this, pallets which are likely to be unloaded piecemeal can be stored along the edge faces of the lattice framework at the base of the lattice framework. Thus, the staff have access to the pallets and can simply remove one or two cases of soft drinks, for example, without having to retrieve the pallet from the lattice framework and then return it to the original storage position within the lattice framework using the robotic load handler in the usual way. It will be appreciated that this greatly speeds up piecemeal retrieval of goods from pallets within the lattice framework, providing greater efficiency and convenience for the user. However, there is a limited availability of storage bays around the perimeter of the lattice framework at the base of the lattice framework which allows perimeter picking from pallets stored around a perimeter of the lattice framework which are accessible.

The present invention is directed towards overcoming this problem.

Various storage and retrieval systems are disclosed in WO2019/141877 A1, WO2019/238639 A1, WO2019/238694 A1, WO2019/238702 A1, CA2269168 A1 and EP3617096 A1.

### Statements of Invention

In accordance with the present invention, the automated storage and retrieval system is provided with a pedestrian tunnel extending at least partially into the lattice framework to define a pedestrian access walkway within the lattice framework alongside a number of the storage bays. Thus, advantageously the number of storage bays available for perimeter picking is increased with a minimal loss of racking space. The pedestrian tunnel allows direct access to storage bays within the lattice framework.

In one embodiment of the invention the tunnel is formed by a plurality of spaced-apart reinforcing frame elements at a base of the lattice framework supporting the lattice framework above the tunnel.

In another embodiment each reinforcing frame element comprises at least two spaced-apart upright posts with a lintel beam mounted across a top of the posts.

In another embodiment the lintel beam projects outwardly of each outermost post, having a connector for attachment to the lattice framework mounted at each outer end of the lintel beam.

In another embodiment the upright posts and the lintel beam comprise I-section beams.

In another embodiment the lintel beam is an I-section beam comprising an upright web extending between a bottom flange and a top flange which project outwardly at each side of the upright web, the flanges being parallel to each other and perpendicular to the upright web, the flanges and web defining a channel at each side of the upright web, reinforcing plates being mounted within the channel perpendicular to the flanges and the web, and extending between the flanges on both sides of the web at locations where the lintel beam rests on the posts and where the lintel beam supports structural members of the lattice framework above the lintel beam.

In another embodiment each post is an I-section beam having a central web extending between outer flanges, the web of each post aligned in the same plane as the web in the lintel beam.

In another embodiment each connector is of upright channel section for reception and engagement with an upright stanchion of the lattice framework.

In another embodiment the connector has an inner plate attached to the lintel beam and outwardly extending wings at each side of the inner plate, the inner plate and the wings together forming the upright channel for reception of the stanchion.

In another embodiment a foot plate is mounted at a lower end of each post.

In another embodiment three spaced-apart posts support the lintel beam in the centre and adjacent each end of the lintel beam.

### Brief Description of the Drawings

The invention will be more clearly understood by the following description of some embodiments thereof, given by way of example only, with reference to the accompanying drawings, in which:
Fig. 1 is a perspective view of an automated storage and retrieval system according to the invention;

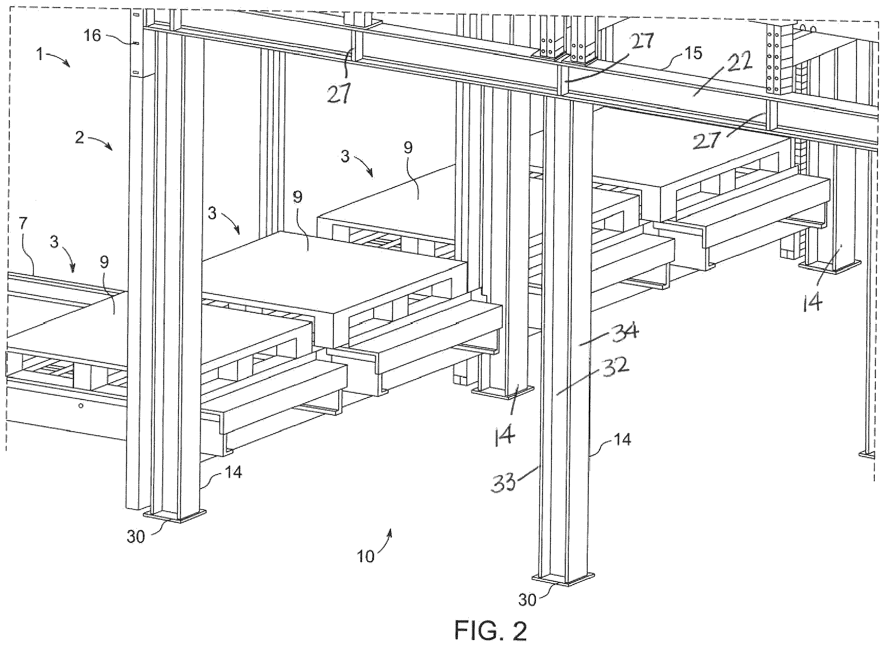

Fig. 2 is an enlarged detail perspective view showing portion of the automated storage and retrieval system; and

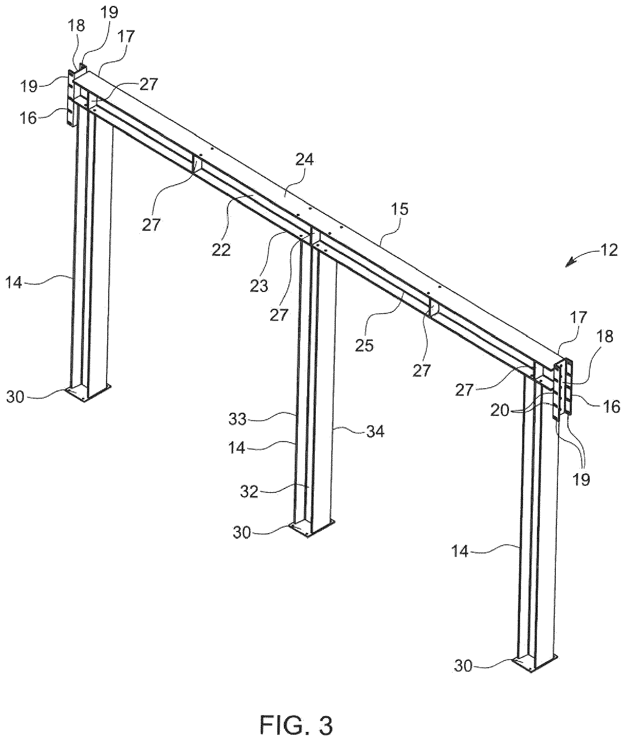

Fig. 3 is a perspective view of a reinforcing frame element forming portion of the automated storage and retrieval system of the invention.

### Detailed Description of the Preferred Embodiments

Referring to the drawings, there is illustrated an automated storage and retrieval system according to the invention, indicated generally by the reference numeral 1. The system 1 comprises a three-dimensional lattice framework 2 having a plurality of storage bays 3. The framework 2 is formed by bolting together a plurality of frame members to form vertical stanchions 5 interconnected by horizontal beams 6. A rail network 7 extends through the framework 2. A robotic load handler (not shown) is movable through the rail network 7 to deliver a load pallet 9 to each storage bay 3 and to retrieve the load pallet 9 from the storage bay 3 as required.

In accordance with the present invention, a pedestrian tunnel 10 extends through the lattice framework 2 at a base of the lattice framework 2 to define a pedestrian access walkway within the lattice framework 2 alongside a number of the storage bays 3. It will be appreciated that this greatly increases the number of storage bays 3 from which perimeter picking is available. At the same time, there is minimal loss in storage capacity, as the lattice framework 2 extends upwardly above the tunnel 10.

The tunnel 10 is formed by a plurality of spaced-apart reinforcing frame elements 12 at a base of the lattice framework 2 and supporting the lattice framework 2 above the tunnel 10. Each reinforcing frame 12 comprises at least two, and in this case three, spaced-apart upright posts 14 with a lintel beam 15 mounted across a top of the posts 14.

It will be noted that the lintel beam 15 projects outwardly of each outermost post 14. A connector 16 for attachment to stanchions 5 of the lattice framework 2 is mounted at each outer end 17 of the lintel beam 15.

Each connector 16 is of channel section, having an inner plate 18 fixed to the lintel beam 15, and outwardly extending wings 19 at each side of the inner plate 18. The inner plate 18 and wings 19 together form an upright channel for reception of a stanchion 5, wrapping around three sides of the stanchion 5. A number of spaced-apart through holes 20 are provided in each wing 19 for bolting the wings 19 to the stanchions 5 of the lattice framework 2. Other connector arrangements are also possible.

The lintel beam 15 is an I-section beam comprising an upright web 22 extending between a horizontal bottom flange 23 and a horizontal top flange 24 which project outwardly at each side of the upright web 22. The flanges 23, 24 are parallel to each other and also perpendicular to the upright web 22. At each side of the web 22, a channel 25 is defined by the web 22 and the outwardly extending flanges 23, 24.

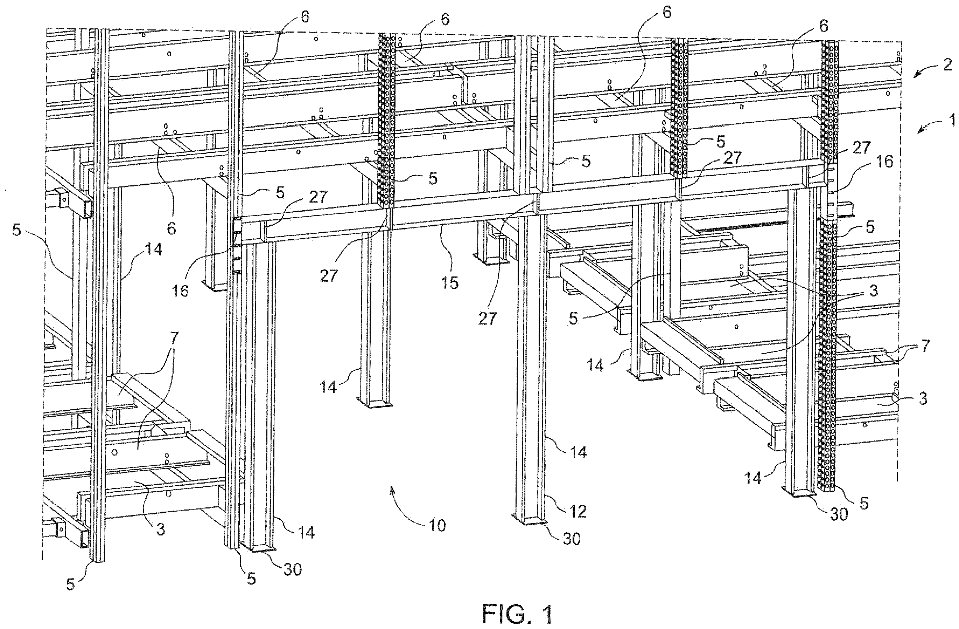

Reinforcing plates 27 are mounted within the channel 25 perpendicular to the flanges 23, 24 and the web 22, and extending between the flanges 23, 24 on both sides of the web 22 at locations where the lintel beam 15 rests on the posts 14 and where the lintel beam 15 supports structural members of the lattice framework 2, namely stanchions 5 above the lintel beam 15, as shown in Fig. 1.

A foot plate 30 is mounted at a lower end of each post 14. Each foot plate 13 may be provided with through holes for bolting the foot plate 30 to the floor of the warehouse within which the system 1 is mounted.

Each post 14 is an I-section beam having a central web 32 extending between outer flanges 33, 34. It will be noted that the web 32 of each post 14 is aligned in the same plane as the web 22 in the lintel beam 15.

As can be seen in Fig. 1, a number of spaced-apart reinforcing frame elements 12 extend into the lattice framework 2 to form the tunnel 10.

Advantageously, the present invention provides a storage rack for an automated storage and retrieval system with one or more tunnels. By the use of a tunnel, it provides the possibility of increased perimeter picking, whilst at the same time the loss of storage space is minimised, as the space above the tunnel can still be used for storage. While the tunnelling is expensive to produce, it greatly increases the pick faces available to the user which is particularly advantageous to the user so that they do not have to take a pallet out of stock to allow order picking of one or two items from a particular pallet.

The terms "comprise" and "include", and any variations thereof required for grammatical reasons, are to be considered as interchangeable and accorded the widest possible interpretation.

The invention is not limited to the embodiments hereinbefore described which may be varied in both construction and detail within the scope of the appended claims.

## Claims

1. An automated storage and retrieval system (1) including a three-dimensional lattice framework (2) having a plurality of storage bays (3), a rail network (7) extending through the framework (2), a robotic load handler movable through the rail network (7) to each storage bay (3) for delivery of a load pallet to, or retrieval of a load pallet from, each storage bay (3), and a pedestrian tunnel (10) extending at least partially into the lattice framework (2) to define a pedestrian access walkway within the lattice framework (2) alongside a number of the storage bays (3), the pedestrian tunnel (10) being formed by a plurality of spaced-apart reinforcing frame elements (12) at a base of the lattice framework (2) supporting the lattice framework (2) above the pedestrian tunnel (10), each reinforcing frame element (12) comprising at least two spaced-apart upright posts (14) with a lintel beam (15) mounted across a top of the posts (14), the lintel beam (15) projecting outwardly of each outermost post (14), having a connector (16) for attachment to the lattice framework (2) mounted at each outer end of the lintel beam (15).

2. The automated storage and retrieval system as claimed in claim 1, wherein the upright posts (14) and the lintel beam (15) comprise I-section beams.

3. The automated storage and retrieval system (1) as claimed in claim 1 or claim 2, wherein the lintel beam (15) is an I-section beam comprising an upright web (22) extending between a bottom flange (23) and a top flange (24) which project outwardly at each side of the upright web (22), the flanges (23, 24) being parallel to each other and perpendicular to the upright web (22), the flanges (23, 24) and web (22) defining a channel (25) at each side of the upright web (22), reinforcing plates (27) being mounted within the channel (25) perpendicular to the flanges (23, 24) and the web (22), and extending between the flanges (23, 24) on both sides of the web (22) at locations where the lintel beam (15) rests on the posts (14) and where the lintel beam (15) supports structural members of the lattice framework (2) above the lintel beam (15).

4. The automated storage and retrieval system (1) as claimed in claim 2 or claim 3, wherein each post (14) is an I-section beam having a central web (32) extending between outer flanges (33, 34), the web (32) of each post (14) aligned in the same plane as the web (22) in the lintel beam (15).

5. The automated storage and retrieval system (1) as claimed in any preceding claim, wherein each connector (16) is of upright channel section for reception and engagement with an upright stanchion (5) of the lattice framework (2).

6. The automated storage and retrieval system (1) as claimed in claim 5, wherein the connector (16) has an inner plate (18) attached to the lintel beam (15) and outwardly extending wings (19) at each side of the inner plate (18), the inner plate (18) and the wings (19) together forming the upright channel for reception of the stanchion (5).

7. The automated storage and retrieval system (1) as claimed in any preceding claim, wherein a foot plate (30) is mounted at a lower end of each post (14).

8. The automated storage and retrieval system (1) as claimed in any preceding claim, wherein three spaced-apart posts (14) support the lintel beam (15) in the centre and adjacent each end of the lintel beam (15).
